# EUROPEAN PATENT SPECIFICATION

(11) **EP 2 712 296 B1**
(45) Date of publication and mention of the grant of the patent: **04.09.2019**
(21) Application number: 12785300.0
(22) Date of filing: 16.05.2012
(51) Int. Cl.: A47J 37/04, A47J 37/07

(54) **PIZZA OVEN ACCESSORY FOR A BARBECUE**
PIZZAOFENZUBEHÖR FÜR EINEN GRILL
ACCESSOIRE DE FOUR À PIZZA CONÇU POUR UN BARBECUE

(30) Priority: 19.05.2011 ZA 201103655
(43) Date of publication of application: 02.04.2014
(73) Proprietor: Snyman, Anton, 7550 Cape Town, Western Cape (ZA)
(72) Inventor: Snyman, Anton, 7550 Cape Town, Western Cape (ZA)
(74) Representative: Fry, David John
(86) International application number: PCT/ZA2012/000033
(87) International publication number: WO 2012/159131

(56) References cited:
- CN-Y- 201 310 929
- DE-A1- 19 805 163
- GB-A- 2 465 880
- JP-A- 2006 102 488
- US-A- 3 657 996
- US-A- 5 665 258
- US-A- 5 787 873
- US-A1- 2010 147 281
- US-B1- 6 799 567

## Description

### BACKGROUND OF THE INVENTION

This invention relates to a pizza oven accessory for a barbecue. More specifically, the invention relates to a pizza oven accessory for converting a kettle-type barbecue into a pizza oven.

Accessories for converting existing types of cooking apparatus into alternative ones are known. One known type of accessory is a rotisserie insert supportable on a base of a conventional barbecue. The rotisserie insert is typically made up of a tubular body adapted to receive a rotating skewer therein on which food to be cooked is receivable. Skewered food is placed into the rotisserie insert through an upper open end with no need for a lid or an access opening in a side wall of the rotisserie insert. It will be appreciated that for the purposes of cooking pizza, a lid is essential to keep the heat within the barbecue. As such, an access opening in a side wall through which a pizza can be introduced and removed from the barbecue is essential for a pizza oven type insert.

Another known type of accessory is a smoker insert receivable between the base and lid of a conventional barbecue for converting the conventional barbecue into a smoker. The smoker insert is typically in the form of a tubular body having one or more formations therein to support a food receiving grill. Some smoker inserts also define closable openings in the side wall. Although much more suitable to the cooking of a pizza, the openings defined by the smoker inserts are typically positioned below a surface on which the food is receivable and used generally to add further fuel to the barbecue.

Buckaroo Design KK in Japanese patent document no. JP2006102488 teaches of a portable cooking utensil for cooking pizza and the like made up of a container comprising sidewalls, a base member at a first end of the sidewalls and a lid supportable at a second end of the sidewalls. The sidewall define an access opening through which food can be introduced and removed from a cooking chamber defined within the container. A disadvantage of the Buckaroo Design KK utensil is that the base is stationary, making it very difficult to rotate the food within the cooking chamber thereby to enable it to cook evenly.

Whitehouse in US patent document no. US5787873 teaches of a rotatably driven grid for a barbecue grill. Although this device addresses the shortcomings of the Buckaroo Design KK utensil, it has many shortcomings of its own, namely: (i) the absence of an access opening requiring the lid to be removed for inspecting how the food is in use cooking, causing heat to unnecessarily escape; (ii) uncooked dough of a pizza introduced onto the grid will tend to sag through the spaces defined between adjacent bars of the grid and then expand during the cooking process to encase the bars in the dough making it difficult to remove the cooked pizza from the grid; (iii) exposure of the pizza dough directly to heat through the spaces defined between the bars of the grid may cause the exposed portions of the dough to burn before the rest of the pizza is properly cooked; and (iv) where the grid is already hot when the uncooked pizza is placed on the grid, those parts of the pizza dough exposed directly to the bars are likely to burn.

GUSTAVSEN in published US patent application no. 2010/0147281 teaches of a hollow bake oven body that can fit over a conventional barbecue grill comprising a support base, sidewalls with an access opening defined therein, a lid and a rotatable food receiving member in which pizza can be baked. A disadvantage of this GUSTAVSEN oven is that it does not include a guard positioned along at least a periphery of the food receiving member for preventing the pizza from falling thereof and into the fire.

Yet another known type of accessory is the KettlePizza Oven which is a pizza oven insert receivable between the base and lid of a conventional barbecue for converting the conventional barbecue into a pizza oven. The KettlePizza Oven comprises a tubular body and an access opening therein through which a pizza may be introduced into the pizza oven. A disadvantage of the KettlePizza Oven is that the pizza is supported on the original grill of the conventional barbecue, preventing the pizza from being easily rotated during cooking to ensure that the pizza is evenly cooked. Another disadvantage of KettlePizza Oven is the fact that the insert does not fit the plate profiles of the standard 570mm kettle and its lid. The result of this is that valuable heat escapes during the baking cycle.

Accordingly, it is an object of the present invention to provide a pizza oven accessory for barbecues that addresses the disadvantages of the known prior art comprising a hollow body receivable between the base and lid of a barbecue, a support member at or near a lower end of the hollow body on which a food receiving member is rotatably supported and a guard mounted on the support member, running closely along at least a portion of a periphery of, and extending higher than an upper surface of, the food receiving member.

### SUMMARY OF THE INVENTION

According to the invention there is provided a pizza oven accessory for a barbecue including:
a hollow body receivable between a fuel receiving base and a lid of the barbecue so as to define in use a cooking chamber within the hollow body and between the base and lid of the barbecue, the hollow body further defining an access opening through which food is introducible or removable from the cooking chamber wherein the lower end of the hollow body is supportable on the fuel receiving base of the barbecue, and further wherein the hollow body includes an upper end on which the lid of the barbecue is supportable and one or more side walls extending between the lower and upper ends in which the access opening is defined; a food receiving member on which the food is receivable, the food receiving member being rotatably supported within or in close proximity with the hollow body;wherein the food receiving member is rotatably supported on a support member, at or near a lower end of the hollow body; characterised in that: the pizza oven accessory further includes a guard mounted on the support member within the hollow body, the guard extending higher than an upper surface of the food receiving member and running closely along at least a portion of a periphery of the food receiving member, wherein the guard is located in the hollow body nearer the side wall or portion thereof opposite the side wall or portion thereof defining the access opening, for preventing food introduced in use into the pizza oven accessory from falling off the food receiving member.

The lower end of the hollow body is supportable on the fuel receiving base of the barbecue, and further wherein the hollow body includes an upper end on which the lid of the barbecue is supportable and a side wall(s) extending between the lower and upper ends in which the access opening is defined. Preferably, the barbecue is a kettle-type barbecue and the hollow body is tubular in shape. More preferably, the pizza oven accessory further includes one or more handles extending outwardly from the side wall(s) of the hollow body.

Generally, the food receiving member may be rotatably supported offset from a central axis extending through the lower and upper ends of the hollow body such that the food receiving member is located within the hollow body nearer the side wall or portion thereof defining the access opening than to the opposite side wall or portion thereof. Preferably, the upper surface of the food receiving member may be aligned with a bottom edge of the access opening defined in the hollow body. More preferably, the food receiving member is round in shape.

In a particularly preferred embodiment, the food receiving member is a pizza stone, with the pizza stone being rotatable on a rotating wheel rotatably mounted on the support member, thereby enabling in use the food to be rotated during cooking so as to cook the food evenly.

The guard is located in the hollow body nearer the side wall or portion thereof opposite the side wall or portion thereof defining the access opening.

The support member may be supportable within the hollow body on corresponding support formations located within the hollow body. Alternatively, the support member is fastenable to the hollow body. In yet another alternative embodiment, the support member is fixed to the hollow body.

Preferably, the food is pizza. It will be appreciated however that the pizza oven accessory may be used for any number of other oven-baked foods including bread, meat, fish and various other foods.

According to a second aspect of the invention, there is provided a barbecue including a fuel receiving base, a lid and a pizza oven accessory as herein described.

### BRIEF DESCRIPTION OF THE DRAWINGS

The invention will now be described in more detail, by way of example only, with reference to the accompanying drawings in which:
- **Figure 1**: shows an exploded perspective view of a pizza oven accessory for a barbecue in accordance with the present invention;
- **Figure 2**: shows a perspective view of an assembled pizza oven accessory relative to a barbecue on which the pizza oven accessory is receivable;
- **Figure 3**: shows a top view of the assembled pizza oven accessory of figure 2;
- **Figure 4**: shows a perspective view of the assembled pizza oven accessory supported on a fuel receiving base of the barbecue; and
- **Figure 5**: shows a perspective view of the assembled pizza oven accessory received between the fuel receiving base and a lid of the barbecue.

### DETAILED DESCRIPTION OF THE DRAWINGS

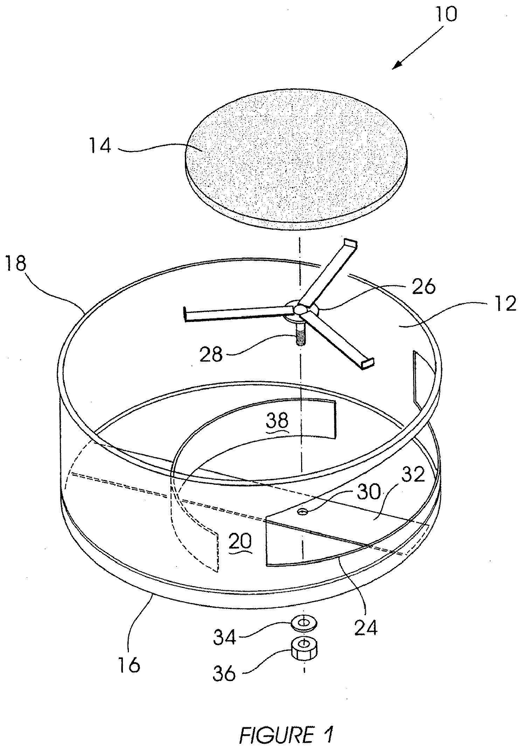

A pizza oven accessory for a barbecue according to a preferred embodiment of the invention is designated generally with the reference numeral 10 in figure 1. The pizza oven accessory comprises a hollow body 12 and a food receiving member 14 rotatably mounted within or in close proximity with the hollow body 12.

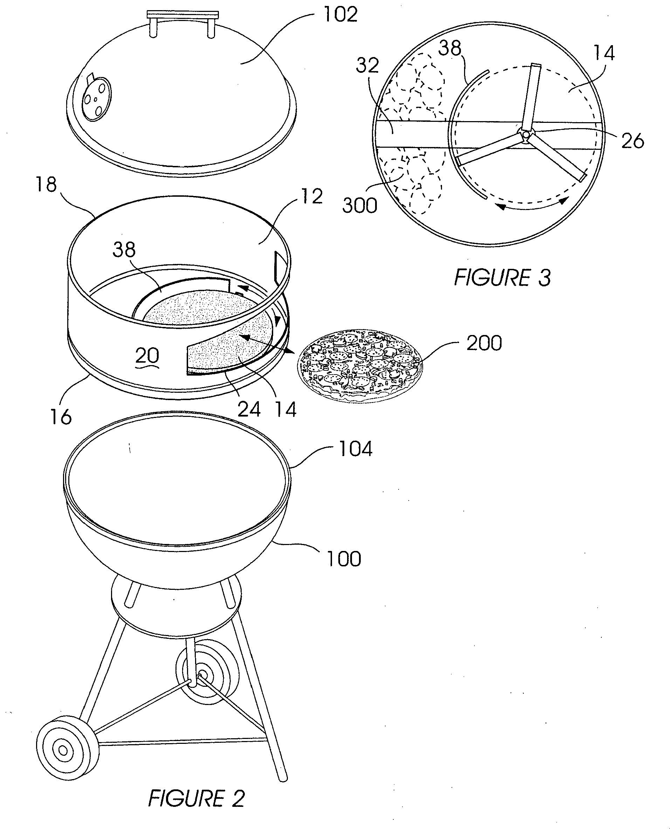

Although the pizza oven accessory 10 may be applied to any type of barbecue, the invention will be described with reference to a kettle type barbecue having a substantially hemispherical fuel receiving base 100 and a substantially hemispherical lid 102 as illustrated in figure 2. With reference to figure 1 and figure 2, the hollow body 12 is tubular in shape having a lower end 16, an upper end 18 and a side wall 20 extending between the lower and upper ends 16,18.

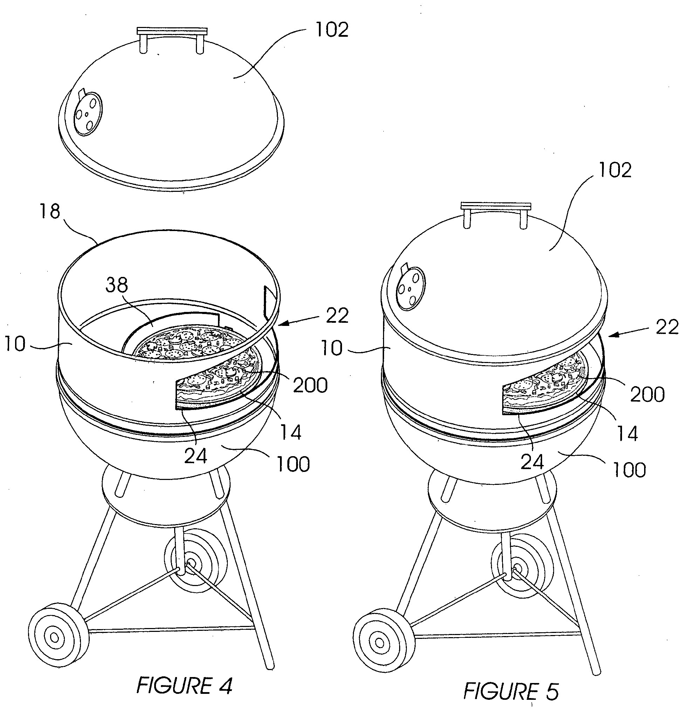

With reference specifically to figure 2 and figure 4, the lower end 16 of the tubular body 12 is adapted to rest on an upper rim 104 of the fuel receiving base 100 of the barbecue, with the upper end 18 of the pizza oven accessory adapted to receive the lid 102 of the barbecue as illustrated in figure 5. In this manner, the pizza oven accessory 10 is receivable between the fuel receiving base 100 and the lid 102 of the barbecue so as to define a cooking chamber 22 within the tubular body 12 and between the fuel receiving base 100 and the lid 102 of the barbecue. It will be appreciated that the tubular body 12 is shaped and sized to fit snugly between the receiving base 100 and the lid 102 of the barbecue so as to retain as much heat within the barbecue and cooking chamber 22 as possible.

Referring now to figure 1 and figure 2, the tubular body 12 of the pizza oven accessory 10 defines an access opening 24 through which a pizza 200, or any other type of food, is introducible and/or removable from the cooking chamber 22. With specific reference to figure 1 and figure 3, the food receiving member 14 is preferably a round pizza stone supported on a rotating wheel 26 having a threaded shank 28 extending downwardly from the rotating wheel 26. The threaded shank 28 of the rotating wheel 26 is receivable in an aperture 30 defined in a support member 32 extending across the lower end 16 of the tubular body 12.

The rotating wheel 26 is rotatably secured to the support member 32 by a washer 34 and a nut 36 tightened to the threaded shank 28 on an underside of the support member 32. It will be appreciated that although the support member 32 is shown as being welded to the tubular body 12, it may be fixed thereto other fastening means or supported therein by corresponding support formations on the tubular body 12 and the support bar 32. It will be appreciated that the pizza stone 14 is illustrated in broken lines in figure 3 to show the workings of the rotating arm 26 with the support bar 32.

Preferably, the aperture 30 on the support member 32 is not located on a central axis extending through the lower and upper ends 16, 18 of the tubular body 12, such that the pizza stone 14 is offset from the centre and positioned closer to the access opening side of the tubular body 12 than to a the opposite side thereof. The offset position of the pizza stone 14 enables easy introduction and removable of the pizza 200 to and from the pizza stone 14. The ease of introduction and removable of the pizza 200 is further enabled by the alignment of an upper surface of the pizza stone 14 with a lower edge of the access opening 24. The offset position of the pizza stone 14 serves another very important purpose, similar to that of a convection oven, in that the heat of the flames moves operatively upwardly through gaps defined between the pizza stone 14 and the sidewall 20 of the hollow body 12, so as to pass over the top of the pizza and bake the toppings thereon.

To prevent the pizza 200 from slipping off the pizza stone and into the fuel receiving base 100 of the barbecue, a guard 38 is mounted to the support bar 32. The guard 38 extends higher than the upper surface of the pizza stone 14, runs closely along at least a portion of a periphery of the pizza stone 14 and is located in the tubular body 12 nearer the side opposite the side wall defining the access opening 24.

In use, and with reference specifically to figure 3, 4 and 5, the pizza oven accessory 10 is mounted between the fuel receiving base 100 and the lid 102 of the barbecue to form a pizza oven. Burning fuel 300, for example charcoal and/or wood, is positioned in the fuel receiving base 100 of the barbecue so as to lie under the annular space defined between the guard 38 and the side of the tubular body 12 opposite to the side wall in which the access opening 24 is defined. This enables heat from the burning fuel to correctly heat the pizza stone 14 and pass upwardly into the cooking chamber 22 to cook the top of the pizza 200.

When the correct temperature has been obtained, the pizza 200 is introduced into the cooking chamber 22 of the pizza oven accessory 10 and rested on the pizza stone 14. The ability of the pizza stone 14 to rotate relative to the tubular body 12 enables the pizza 200 to be rotated during cooking ensuring that the pizza 200 is evenly cooked. Once cooked, the pizza 200 is removed from the pizza oven accessory 10 via the access opening 24.

Although the invention has been described above with reference to preferred embodiments and examples, it will be appreciated that many modifications or variations of the invention are possible without departing from the scope of the invention as defined in the appended claims. For example, the pizza oven accessory 10 may include one or more handles extending outwardly from the side wall 20 of the tubular body 12. In another example, the food receiving member 14 is mounted within the radial limits of the side wall 20 of the hollow body 12, but passed the axial limits of the lower end 16 or the upper end 18 thereof. In yet another example, the pizza stone 14 can be replaced by any number of food receiving member, such as a hot rock or a frying pan.

## Claims

1. A pizza oven accessory (10) for a barbecue including:
a hollow body (12) receivable between a fuel receiving base (100) and a lid (102) of the barbecue operable to define a cooking chamber (22) within the hollow body(12) and between the base (100) and lid (102) of the barbecue, the hollow body(12) further defining an access opening (24) through which food (200) is introducible or removable from the cooking chamber (22), wherein the lower end (16) of the hollow body (12) is supportable on the fuel receiving base (100) of the barbecue, and further wherein the hollow body (12) includes an upper end (18) on which the lid (102) of the barbecue is supportable and one or more side walls (20) extending between the lower and upper ends (16, 18) in which the access opening (24) is defined;
a food receiving member (14) on which the food (200) is receivable, the food receiving member (14) being rotatably supported within or in close proximity with the hollow body (12);
wherein the food receiving member is rotatably supported on a support member (32), at or near a lower end (16) of the hollow body (12);
**characterised in that** the pizza oven accessory (10) further includes a guard (38) mounted on the support member (32) within the hollow body (12), the guard (38) extending higher than an upper surface of the food receiving member (14), wherein the guard (38) is located in the hollow body (12) nearer the side wall (20) or portion thereof opposite the side wall or portion thereof defining the access opening (24) for preventing food (200) introduced in use into the pizza oven accessory (10) from falling off the food receiving member (14).

2. A pizza oven accessory (10) according to claim 1, wherein the barbecue is a kettle-type barbecue and the hollow body (12) is tubular in shape.

3. A pizza oven accessory (10) according to claim 1 or claim 2, further including one or more handles extending outwardly from the side walls (20) of the hollow body (12).

4. A pizza oven accessory (10) according to claim 3, wherein the food receiving member (14) is rotatably supported offset from a central axis extending through the lower and upper ends (16, 18) of the hollow body (12) such that the food receiving member (14) is located within the hollow body (12) nearer the side wall (20) or portion thereof defining the access opening (24) than to the opposite side wall or portion thereof.

5. A pizza oven accessory (10) according to claim 4, wherein the upper surface of the food receiving member (14) is aligned with a bottom edge of the access opening (24) defined in the hollow body (12).

6. A pizza oven accessory (10) according to claim 5, wherein the food receiving member (14) is round in shape.

7. A pizza oven accessory (10) according to claim 6, wherein the food receiving member (14) is a pizza stone, the pizza stone (14) being rotatable on a rotating wheel (26) rotatably mounted on the support member (32), thereby enabling in use the food (200) to be rotated during cooking so as to cook the food (200) evenly.

8. A pizza oven accessory (10) according to any one of claims 1 to 7, wherein the support member (32) is supportable within the hollow body (12) on corresponding support formations located within the hollow body (12).

9. A pizza oven accessory (10) according to any one of claims 1 to 8, wherein the support member (32) is fastenable to the hollow body (12).

10. A pizza oven accessory (10) according to any one of claims 1 to 8, wherein the support member (32) is fixed to the hollow body (12).

11. A barbecue including a fuel receiving base (100), a lid (102) and a pizza oven accessory (10) according to any one of claims 1 to 10.

## Patentansprüche

1. Pizzaofenzubehörteil (10) für einen Grill, umfassend:
einen Hohlkörper (12), der zwischen einer Brennmaterialaufnahmebasis (100) und einem Deckel (102) des Grills aufgenommen werden kann, sodass eine Garkammer (22) innerhalb des Hohlkörpers (12) und zwischen der Basis (100) und dem Deckel (102) des Grills definiert wird, wobei der Hohlkörper (12) ferner eine Zugangsöffnung (24) definiert, durch die Lebensmittel (200) in die Garkammer (22) eingeführt oder aus ihr herausgenommen werden können, wobei das untere Ende (16) des Hohlkörpers (12) auf der Brennmaterialaufnahmebasis (100) des Grills aufsetzbar ist, und ferner wobei der Hohlkörper (12) ein oberes Ende (18), auf dem der Deckel (102) des Grills aufsetzbar ist, und eine oder mehrere Seitenwände (20) aufweist, die sich zwischen dem unteren und oberen Ende (16, 18) erstrecken, in denen die Zugangsöffnung (24) definiert ist;
ein Lebensmittelaufnahmeelement (14), auf dem das Lebensmittel (200) aufgenommen werden kann, wobei das Lebensmittelaufnahmeelement (14) innerhalb oder in unmittelbarer Nähe des Hohlkörpers (12) drehbar gelagert ist;
wobei das Lebensmittelaufnahmeelement drehbar auf einem Trägerelement (32) an oder nahe einem unteren Ende (16) des Hohlkörpers (12), gelagert ist;
**dadurch gekennzeichnet, dass** das Pizzaofenzubehörteil (10) ferner eine Schutzabdeckung (38) auf dem Trägerelement (32) innerhalb des Hohlkörpers (12) aufweist, wobei sich die Schutzabdeckung (38) höher als eine Oberseite des Lebensmittelaufnahmeelements (14) erstreckt, wobei sich die Schutzabdeckung (38) in dem Hohlkörper (12) näher an der Seitenwand (20) oder einem Abschnitt davon gegenüber der die Zugangsöffnung (24) definierenden Seitenwand oder einem Abschnitt davon befindet, um zu verhindern, dass das im Betrieb in das Pizzaofenzubehörteil (10) eingeführte Lebensmittel (200) von dem Lebensmittelaufnahmeelement (14) herabfällt.

2. Pizzaofenzubehörteil (10) nach Anspruch 1, wobei der Grill ein Kugelgrill ist und der Hohlkörper (12) eine rohrförmige Form aufweist.

3. Pizzaofenzubehörteil (10) nach Anspruch 1 oder Anspruch 2, ferner umfassend einen oder mehrere Griffe, die sich von den Seitenwänden (20) des Hohlkörpers (12) nach außen erstrecken.

4. Pizzaofenzubehörteil (10) nach Anspruch 3, wobei das Lebensmittelaufnahmeelement (14) so drehbar gelagert und von einer Mittelachse abgesetzt ist, die sich durch das untere und obere Ende (16, 18) des Hohlkörpers (12) erstreckt, dass das Lebensmittelaufnahmeelement (14) innerhalb des Hohlkörpers (12) näher an der die Zugangsöffnung (24) definierenden Seitenwand (20) oder einem Abschnitt davon als an der gegenüberliegenden Seitenwand oder einem Abschnitt davon angeordnet ist.

5. Pizzaofenzubehörteil (10) nach Anspruch 4, wobei die Oberseite des Lebensmittelaufnahmeelements (14) mit einer Unterkante der in dem Hohlkörper (12) definierten Zugangsöffnung (24) fluchtet.

6. Pizzaofenzubehörteil (10) nach Anspruch 5, wobei das Lebensmittelaufnahmeelement (14) eine runde Form aufweist.

7. Pizzaofenzubehörteil (10) nach Anspruch 6, wobei das Lebensmittelaufnahmeelement (14) ein Pizzastein ist, wobei der Pizzastein (14) auf einem rotierenden Rad (26) drehbar ist, das drehbar auf dem Trägerelement (32) montiert ist, wodurch es im Betrieb ermöglicht wird, das Lebensmittel (200) während des Garens zu drehen, um das Lebensmittel (200) gleichmäßig zu garen.

8. Pizzaofenzubehörteil (10) nach einem der Ansprüche 1 bis 7, wobei das Trägerelement (32) innerhalb des Hohlkörpers (12) auf entsprechenden innerhalb des Hohlkörpers (12) angeordneten Tragausbildungen getragen werden kann.

9. Pizzaofenzubehörteil (10) nach einem der Ansprüche 1 bis 8, wobei das Trägerelement (32) an dem Hohlkörper (12) befestigbar ist.

10. Pizzaofenzubehörteil (10) nach einem der Ansprüche 1 bis 8, wobei das Trägerelement (32) an dem Hohlkörper (12) befestigt ist.

11. Grill, umfassend eine Brennmaterialaufhahmebasis (100), einen Deckel (102) und ein Pizzaofenzubehörteil (10) nach einem der Ansprüche 1 bis 10.

## Revendications

1. Accessoire de four à pizza (10) pour un barbecue incluant :
un corps creux (12) pouvant être reçu entre une base de réception de combustible (100) et un couvercle (102) du barbecue utilisable pour définir une chambre de cuisson (22) à l'intérieur du corps creux (12) et entre la base (100) et le couvercle (102) du barbecue, le corps creux (12) définissant en outre une ouverture d'accès (24) à travers laquelle des aliments (200) peuvent être introduits ou retirés de la chambre de cuisson (22), dans lequel l'extrémité inférieure (16) du corps creux (12) peut être supportée sur la base de réception de combustible (100) du barbecue, et en outre dans lequel le corps creux (12) inclut une extrémité supérieure (18) sur laquelle le couvercle (102) du barbecue peut être supporté et une ou plusieurs parois latérales (20) s'étendant entre les extrémités inférieure et supérieure (16, 18) dans lesquelles l'ouverture d'accès (24) est définie ;
un élément de réception d'aliments (14) sur lequel les aliments (200) peuvent être reçus, l'élément de réception d'aliments (14) étant supporté de manière rotative à l'intérieur du ou en étroite proximité avec le corps creux (12) ;
dans lequel l'élément de réception d'aliments est supporté de manière rotative sur un élément de support (32), au niveau de ou à proximité d'une extrémité inférieure (16) du corps creux (12) ;
**caractérisé en ce que** l'accessoire de four à pizza (10) inclut en outre une protection (38) montée sur l'élément de support (32) à l'intérieur du corps creux (12), la protection (38) s'étendant plus haut qu'une surface supérieure de l'élément de réception d'aliments (14), dans lequel la protection (38) se situe dans le corps creux (12) plus près de la paroi latérale (20) ou d'une partie de celle-ci opposée à la paroi latérale ou d'une partie de celle-ci définissant l'ouverture d'accès (24) pour empêcher aux aliments (200) introduits pendant l'utilisation dans l'accessoire de four à pizza (10) de tomber de l'élément de réception d'aliments (14).

2. Accessoire de four à pizza (10) selon la revendication 1, dans lequel le barbecue est un barbecue de type à couvercle et le corps creux (12) est de forme tubulaire.

3. Accessoire de four à pizza (10) selon la revendication 1 ou 2, incluant en outre une ou plusieurs poignées s'étendant vers l'extérieur depuis les parois latérales (20) du corps creux (12).

4. Accessoire de four à pizza (10) selon la revendication 3, dans lequel l'élément de réception d'aliments (14) est supporté de manière rotative décalé d'un axe central s'étendant à travers les extrémités inférieure et supérieure (16, 18) du corps creux (12) de telle sorte que l'élément de réception d'aliments (14) se trouve à l'intérieur du corps creux (12) plus près de la paroi latérale (20) ou d'une partie de celle-ci définissant l'ouverture d'accès (24) que de la paroi latérale opposée ou d'une partie de celle-ci.

5. Accessoire de four à pizza (10) selon la revendication 4, dans lequel la surface supérieure de l'élément de réception d'aliments (14) est alignée à un bord inférieur de l'ouverture d'accès (24) définie dans le corps creux (12).

6. Accessoire de four à pizza (10) selon la revendication 5, dans lequel l'élément de réception d'aliments (14) est de forme arrondie.

7. Accessoire de four à pizza (10) selon la revendication 6, dans lequel l'élément de réception d'aliments (14) est une pierre à pizza, la pierre à pizza (14) étant rotative sur une roue en rotation (26) montée de manière rotative sur l'élément de support (32), permettant de la sorte aux aliments (200) d'être tournés en cours d'utilisation de façon à cuire les aliments (200) de manière homogène.

8. Accessoire de four à pizza (10) selon l'une quelconque des revendications 1 à 7, dans lequel l'élément de support (32) peut être supporté à l'intérieur du corps creux (12) sur des formations de support correspondantes situées à l'intérieur du corps creux (12).

9. Accessoire de four à pizza (10) selon l'une quelconque des revendications 1 à 8, dans lequel l'élément de support (32) peut être fixé au corps creux (12).

10. Accessoire de four à pizza (10) selon l'une quelconque des revendications 1 à 8, dans lequel l'élément de support (32) est fixé au corps creux (12).

11. Barbecue incluant une base de réception de combustible (100), un couvercle (102) et un accessoire de four à pizza (10) selon l'une quelconque des revendications 1 à 10.
